# EUROPÄISCHE PATENTSCHRIFT

(11) **EP 2 452 456 B1**
(45) Veröffentlichungstag und Bekanntmachung des Hinweises auf die Patenterteilung: **19.03.2014**
(21) Anmeldenummer: 10730448.7
(22) Anmeldetag: 02.07.2010
(51) Int. Cl.: H04L 1/22, H04L 1/06, H04L 1/24

(54) **VERFAHREN UND SYSTEM ZUR ERFASSUNG, ÜBERTRAGUNG UND AUSWERTUNG SICHERHEITSGERICHTETER SIGNALE**
METHOD AND SYSTEM FOR THE DETECTION, TRANSMISSION, AND ANALYSIS OF SAFETY-RELATED SIGNALS
PROCÉDÉ ET SYSTÈME DE DÉTECTION, DE TRANSMISSION ET D'ÉVALUATION DE SIGNAUX ORIENTÉS SÉCURITÉ

(30) Priorität: 07.07.2009 DE 102009026124
(43) Veröffentlichungstag der Anmeldung: 16.05.2012
(60) Teilanmeldung: 13160162.7
(73) Patentinhaber: K. A. Schmersal GmbH & Co. KG, 42279 Wuppertal (DE)
(72) Erfinder: HOTZ, Stephan, 64319 Pfungstadt (DE); KOCH, Jörg, 35435 Wettenberg (DE); SCHLOTZHAUER, Björn, 35096 Weimar (DE)
(74) Vertreter: Stoffregen, Hans-Herbert
(86) Internationale Anmeldenummer: PCT/EP2010/059491
(87) Internationale Veröffentlichungsnummer: WO 2011/003835

(56) Entgegenhaltungen:
- EP-A1- 1 063 789
- EP-A2- 1 589 676
- DE-A1- 3 303 791
- DE-A1- 3 718 582
- DE-A1- 10 332 324
- DE-A1- 19 815 150
- DE-A1- 19 920 299
- DE-A1- 19 925 552
- DE-A1-102007 041 621
- US-A1- 2002 193 146
- US-A1- 2006 212 144
- US-A1- 2007 019 747
- US-A1- 2007 105 505
- US-A1- 2008 089 433
- US-B1- 6 173 814
- US-B1- 6 285 096
- US-B1- 6 417 582
- Anonymous: "Token ring"[Online] 4. Juli 2009 (2009-07-04), Seiten 1-4, XP002604309 Wikipedia, the free encyclopedia Gefunden im Internet: URL:http://en.wikipedia.org/w/index.php?ti tle=Token_ring&oldid=294411270> [gefunden am 2010-10-07]
- Anonymous: "AKTIVER PERSONENSCHUTZ"[Online] 10. Juli 2002 (2002-07-10), Seite 68, XP002622944 ELEKTRO AUTOMATION Gefunden im Internet: URL:http://www.industrie.de/industrie/live /index2.php?menu=1&submenu=3&object_id=100 07278> [gefunden am 2011-02-09]
- ANDREAS WILLIG ET AL: "Ring Stability of the PROFIBUS Token-Passing Protocol Over Error-Prone Links" IEEE TRANSACTIONS ON INDUSTRIAL ELECTRONICS, Bd. 48, Nr. 5, 1. Oktober 2001 (2001-10-01), XP011023882 IEEE SERVICE CENTER, PISCATAWAY, NJ, USA ISSN: 0278-0046
- Anonymous: "Galvanische Trennung"[Online] 20. Mai 2009 (2009-05-20), XP002623122 Wikipedia, the free encyclopedia Gefunden im Internet: URL:http://de.wikipedia.org/w/index.php?ti tle=Galvanische_Trennung&oldid=60242577> [gefunden am 2011-02-16]
- "Galvanische Entkopplung des Bus-I/O zum Feldbus-Funktionsmodul"[Online] 30. März 2005 (2005-03-30), XP002623123 Lenze Gefunden im Internet: URL:http://akb.lenze.de/akb/infopool.nsf/H TML/200501886> [gefunden am 2011-02-16]
- Anonymous: "Frequency-division multiplexing"[Online] 19. Mai 2009 (2009-05-19), XP002623124 Wikipedia, the free encyclopedia Gefunden im Internet: URL:http://en.wikipedia.org/w/index.php?ti tle=Frequency-division_multiplexing&oldid= 290920661> [gefunden am 2011-02-17]
- CAVALIERI S ET AL: "Fault tolerance in Interbus-S standard" COMPUTER STANDARDS AND INTERFACES, Bd. 23, Nr. 3, 1. Juli 2001 (2001-07-01), Seiten 223-235, XP004241215 ELSEVIER SEQUOIA. LAUSANNE, CH ISSN: 0920-5489 DOI: 10.1016/S0920-5489(01)00073-3
- SCHWEINZER H ET AL: "Shared Data on Interbus" INTERNET CITATION, [Online] 1999, XP002269738 Gefunden im Internet: URL:http://www.ict.tuwien.ac.at/komzent/in terbus/SharedData.pdf> [gefunden am 2004-02-10]
- Mitsubishi Electric: "HMI Bediengeräte / IPC / Visualisierungssoftware Technischer Katalog Vision 1000"[Online] Juli 2007 (2007-07), Seiten 1-48, XP002625540 Gefunden im Internet: URL:http://www.antrima-berlin.de/MMI.pdf> [gefunden am 2011-02-25]
- Elan Schaltelemente GmbH: "Esalan Wireless, System and Product Overview WL/06"[Online] 2006, Seiten 1-42, XP002625541 Gefunden im Internet: URL:http://www.bezet.katowice.pl/file_down load/55/ESALAN_WIRELESS_2006_ang.pdf> [gefunden am 2011-02-28]
- MOTOMAN: "Motoman Yasnac XRC, Hochleistungssteuerung für Industrieroboter"[Online] August 2002 (2002-08), Seiten 1-8, XP002625542 Gefunden im Internet: URL:http://www.bisbraun.de/uploads/file/ro boter/motoman/xrc.pdf> [gefunden am 2011-02-25]
- Mitsubishi: "GT1155HS-QSBD, GT1150HS-QLBD, Handy GOT General Description"[Online] 2008, Seiten 1-4, XP002625543 Gefunden im Internet: URL:http://suport.siriustrading.ro/01.DocA ct/2.%20Terminale%20de%20operare%20(HMI)/2 .1.%20GOT1000/2.1.1.%20Unitati%20de%20baza /GT11%20-%20General%20Description%20Manual %20(Handy%20Type)%20JY997D22801-D%20(09.08 ).pdf> [gefunden am 2011-03-01]
- Kim Tae Wan; Lee Kyu-Yeul; Kim Jongwon; Oh Min-Jae; Lee Jie Hyeung: "Wireless Teaching Pendant for Mobile Welding Robot in Shipyard" In: "Proceedings of the 17th World Congress The International Federation of Automatic Control Seoul, Korea, July 6-11, 2008" 11. Juli 2008 (2008-07-11), IFAC , Seoul; Korea , XP002625544Seiten 4304-4309, das ganze Dokument

## Beschreibung

Die Erfindung bezieht sich auf ein Verfahren nach dem Oberbegriff des Anspruchs 1.

Ein Verfahren der eingangs genannten Art ist in der DE-A-199 20 299 beschrieben. Bei dem bekannten Verfahren werden sicherheitsgerichtete Signale mit mindestens einem Erfassungsmittel erfasst und über eine Funk-Übertragungsstrecke an mindestens ein Signalverarbeitungsmittel übertragen.

Die sicherheitsgerichteten Signale werden auf einer Senderseite physikalisch mindestens zweikanalig erfasst und die erfassten Daten logisch mindestens zweikanalig in sicherer Technik über Funk an eine Empfängerseite übertragen. Die empfangenen Daten auf der Empfängerseite werden ebenfalls physikalisch mindestens zweikanalig verarbeitet und überwacht.

Bei dem bekannten Verfahren ist des Weiteren vorgesehen, dass zur mindestens zweikanaligen Verarbeitung als Signaldaten redundante Signale mittels mindestens doppelter elektromechanischer, elektrischer oder elektronischer Eingabeelemente erzeugt werden und von jedem Erfassungsmittel aus den Signaldaten für Übertragungszwecke zusätzliche Sicherungsdaten erzeugt werden, die eine Überwachung ermöglichen.

Die bekannte Schaltungsanordnung bzw. das System umfasst Eingabemittel in Form von sicherheitsrelevanten Tasten, wie Zustimmungsschalter, NOT-HALT-, NOT-STOPP-Befehlsgeräte, Verfahrtasten, die zweikanalig ausgebildet sind. Zur zweikanaligen Auswertung der Eingabemittel sind eine erste und eine zweite Erfassungseinheit vorgesehen, deren Ausgänge als erster und zweiter Kanal mit einem Sender verbunden sind welcher über ein Funkmodul sicherheitsgerichtete Signale zu einem Empfängerbaustein einer Verarbeitungseinheit sendet. In dieser wird das empfangene Signal durch ein erstes und ein zweites Verarbeitungsmittel zweikanalig verarbeitet und ausgewertet.

In dem Artikel "Aktiver Personenschutz", Elektroautomation, Band 2006/006, 10. Juli 2002, ist ebenfalls ein Verfahren zur Erfassung, Übertragung und Auswertung zumindest eines sicherheitsgerichteten Signals beschrieben, wobei das sicherheitsgerichtete Signal in Form eines von einem Zustimmschalter erzeugten Signals vorliegt und mit zumindest einer Erfassungseinheit in Form eines Steuer- oder Programmiergerätes erfasst wird. Das Signal wird über eine Datenverbindung an zumindest eine Auswerteeinheit in Form des dreistufigen Zustimmschalters gesendet.

In Cavaliere S. et al: "Fault tolerance in Interbus-S Standard", Computer Standards and Interfaces, Elsevier Sequoia, Lusanne, CH, Band 23, Nr. 3, 01. Juli 2001, Seiten 223-235, ist offenbart, dass zur Datenübertragung von Slaves an einen Master ein Paket zyklisch durch einen Ring geschickt wird, und dass die Slaves ihre Daten in den Rahmen eintragen.

Ferner wird in Schweinzer H. et al: "Shared Data on interbus", Internet Citation, 1999, XP002269738, vorgeschlagen, dass in einem Interbus-Übertragungssystem ein Shared-Data-Modul die Daten eines anderen Moduls ersetzen kann.

Davon ausgehend liegt der vorliegenden Erfindung die Aufgabe zugrunde, ein Verfahren für die Datenübertragung zwischen Transceifereinheiten und Verarbeitungseinheit bereitzustellen.

Die Aufgabe wird erfindungsgemäß durch ein Verfahren nach Anspruch 1 gelöst, wobei das von der zumindest einen Erfassungseinheit ausgesendete sicherheitsgerichtete Signal über räumlich verteilt angeordnete Transceivereinheiten empfangen wird, wobei die Transceivereinheiten über ein Bussystem mit einer Verarbeitungseinheit (Basisstation) der Auswerteeinheit verbunden sind, dass die Verarbeitungseinheit (Basisstation) zyklisch vorzugsweise alle 25 ms ein Telegramm in Form eines Rahmens in den ringförmigen Bus sendet und dass der Rahmen von jeder Transceivereinheit, welche ein gültiges Funktelegram empfangen hat, bearbeitet wird, wobei eine erste Transceivereinheit die empfangenen Daten in den Rahmen einträgt und von einer weiteren Transceivereinheit ein RSSI-Wert (oder einen anderen Qualtitätsindex) und/oder eine Empfängerkennung ersetzt wird, sofern die eigene Empfangsqualität höher als die eingetragene ist.

Gemäß der Erfindung sind mehrere räumliche verteilte Tranceivereinheiten vorgesehen, wobei der Rahmen von jeder Transceivereinheit, welche ein gültiges Funkftelegramm empfangen hat, bearbeitet wird, wobei eine erste Transceivereinheit die empfangenen Daten in den Rahmen einträgt und/oder ein RSSI-Wert und/oder eine Empfängerkennung ersetzt wird, sofern die eigene Empfangsqualität höher als die eingetragene ist.

Um den Wirkungsbereich der sicherheitsgerichteten Funkübertragungsstrecke flexibel zu optimieren, ist vorgesehen, dass das von der zumindest einen Erfassungseinheit ausgesendete sicherheitsrelevante Signal durch ein oder mehrere räumlich verteilt angeordnete Transceivcreinheiten empfangen wird, wobei die zumindest eine Transceivereinheit über ein Bussystem mit der Verarbeitungseinheit (Basisstation) verbunden ist.

Dadurch wird ermöglicht, dass ein oder mehrere Erfassungseinheiten vorzugsweise in Form von Mobilstationen über eine Funkstrecke mit einer Auswerteeinheit kommunizieren können.

Durch die zumindest eine von der Basisstation räumlich abgesetzte Transceivereinheit kann die Funkausleuchtung des Funksystems in einfachster Weise flexibel an die Umgebung angepasst werden.

Die räumlich verteilt angeordneten Transceivereinheiten bereiten die empfangenen sicherheitsgerichteten Signale auf und übertragen diese in digitaler Form über das Bussystem zur Verarbeitungseinheit (Basisstation).

Um die Übertragungsqualität weiter zu erhöhen wird die Sende-/Empfangsqualität einer Transceivereinheit ermittelt, mit der Folge, dass nur die Transceivereinheit mit der höchsten Sende-/Empfangsqualität für die Kommunikation zwischen der Verarbeitungseinheit (Basisstation) und der Erfassungseinheit verwendet wird.

Ferner ist vorgesehen, dass die Basisstation zyklisch, vorzugsweise alle 25 ms ein Telegramm in Form eines Rahmens (TOKEN) in die ringförmige Busstruktur sendet. Der Rahmen (TOKEN) passiert dann alle Transceivereinheiten mit einer definierten Laufzeit nacheinander, wobei jede Transceivereinheit einen dem im Telegramm in dessen Header implementierten Zähler inkrementiert.

Ferner ist gemäß einer bevorzugten Ausführungsform vorgesehen, dass der Rahmen (TOKEN) von jeder Transceivereinheit, welche ein gültiges Funktelegramm empfangen hat, bearbeitet wird, wobei die empfangenen Daten in den Rahmen (TOKEN) eingetragen werden und/oder ein Qualitätsindex ersetzt wird, sofern die eigene Empfangsqualität höher als die eingetragene ist.

Vorzugsweise erfolgt ein Senden eines Telegramms durch eine Transceivereinheit derart, dass die Basisstation in einem Sender-Kennungsfeld des Rahmens (TOKEN) eine Empfänger-Kennung der Transceivereinheit mit der höchsten Empfangsqualität des letzten Rahmens (TOKEN) einträgt und die Transceivereinheit, deren Kennung im Sender-Kennungsfeld eingetragen ist, das Sende-Telegramm sendet.

Die Transceivereinheiten können auf unterschiedlichen Funkkanälen betrieben werden, insbesondere zur redundanten Übertragung auf zwei Funkkanälen, zum Betrieb mehrerer Mobilstationen an einer Auswerteeinheit, zum drahtlosen Anschluss zusätzlicher Aktoren/ Sensoren an der Auswerteeinheit und/oder zur bidirektionalen sicherheitsgerichteten Übertragung zwischen zwei Auswerteeinheiten.

Für eine optimale Funkausleuchtung weist das System eine Vielzahl räumlich verteilter Transceiver auf. Die räumlich verteilten Transceivereinheiten weisen zumindest eine Antenne sowie zumindest eine Busanbindung, vorzugsweise High-Speed-Busanbindungen auf.

Zur Aufbereitung der empfangenen Signale können die Transceivereinheiten eine Signalaufbereitungseinheit zur Übertragung der Signale über größere Entfernungen aufweisen.

Das Bussystem kann als ringförmige Busstruktur mit optischer und/oder elektrischer Signalübertragung ausgebildet sein.

Ferner ist gemäß einer bevorzugten Ausführungsform vorgesehen, dass die Transceivereinheiten im ringbusförmigen Bussystem kaskadiert angeordnet sind. Die Transceivereinheiten sind zur Spannungsversorgung mit der Basisstation verbunden oder weisen jeweils dezentrale Spannungsversorgungen auf, vorzugsweise galvanisch entkoppelt.

Der vorliegenden Erfindung liegt die weitere Aufgabe zugrunde, ein Verfahren und ein System der eingangs genannten Art derart weiterzubilden, dass die Erfassung sicherheitsgerichteter Signale vereinfacht und deren Übertragung über eine fehlerbehaftete Funkstrecke verbessert wird.

Es ist vorgesehen, dass die Übertragung der sicherheitsgerichteten Signale mittels Funktechnik erfolgt, wobei die Übertragung in Frequenz-, Code- und/oder in Zeitmultiplex-Technik durchgerührt wird. Dabei erfolgt die Übertragung der sicherheitsgerichteten Signale über ein einziges Funksystem bzw. über eine einzige Funkstrecke, wobei jeder Erfassungseinheit ein Funkkanal (FDM, Frequency Devision Multiplexing), ein Zeitschlitz (TDM, Time Devision Multiplexing) oder ein Spreizcode (CDM, Code Devision Multiplex) zugeordnet ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsformen.

Es zeigen:
- Fig. 1: schematische Darstellung von zwei als Mobilstationen ausgebildeten Erfassungseinheiten, welche über Funk mit einer als Basisstation mit abgesetzten Transceivern ausgebildeten Auswerteeinheit kommunizieren,
- Fig. 2: schematische Darstellung einer Mobilstation, welche über Funk mit mehreren Transceivereinheiten gekoppelt ist, die über ein Bussystem mit einer Basisstation verbundenen sind,
- Fig. 3: die in Ringstruktur angeordneten und mit der Basisstation verbundenen Transceiver gemäß Fig. 2,
- Fig. 4: ein Blockschaltbild des Funksystems mit Empfangseinheit und Auswerteeinheit,
- Fig. 5: ein Blockschaltbild der Erfassungseinheit (Mobilstation),
- Fig. 6: ein Blockschaltbild der Auswerteeinheit (Basisstation und Transceiver),
- Fig. 7: ein Blockschaltbild eines Logikblocks (Mobilstation), und
- Fig. 8: ein System zur Übertragung sicherheitsrelevanter sowie applikationsspezifischer Daten über sicherheitszertifizierte Erfassungs-und Verarbeitungseinheiten.

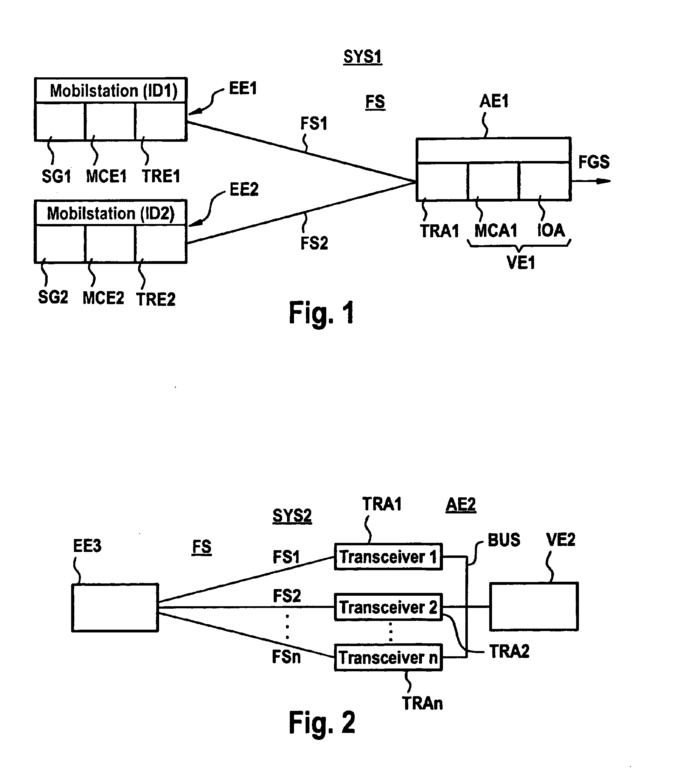

Fig. 1 zeigt in schematischer Darstellung eine erste Ausführungsform eines Systems SYS1 zur Erfassung, Übertragung und Verarbeitung sicherheitsgerichteter Signale S1...Sn. Das System SYS1 umfasst zumindest zwei vorzugsweise mobile Erfassungseinheiten EE1, EE2, die über jeweils eine Funkstrecke FS1, FS2 mit einer, vorzugsweise stationären Auswerteeinheit AE1 gekoppelt sind. Die Funkstrecken FS1, FS2 sind Teil eines Funksystems FS.

Die Erfassungseinheiten EE1, EE2 umfassen jeweils zumindest ein Schaltgerät SG1, SG2 wie Zustimmungsschalter, NOT-STOPP- und/oder NOT-HALT-Befehlsgerät, einen Mikrokontroller-MCE1, MCE2 sowie eine Sende-/Empfangseinheit TRE1, TRE2 wie Transceiver. Die Auswerteeinheit AE umfasst zumindest eine Sende-/Empfangseinheit TRA1 wie Transceiver, eine Verarbeitungseinheit VE1 mit Mikrokontroller MCA sowie Ein-/Ausgabeports IOA.

Das in Fig. 1 dargestellte sicherheitsgerichtete System SYS1 erlaubt die Funkübertragung sicherheitsgerichteter Signale von mehreren Erfassungseinheiten EE1, EE2 und deren logische Verknüpfung in der Auswerteeinheit AE1. Über die Erfassungseinheiten EE1. EE2 werden sicherheitsgerichtete Signale mindestens zweikanalig erfasst und über jeweils eine Funkstrecke FS1, FS2, wobei jede Funkstrecke einem Funkkanal entspricht, an die mindestens zweikanalig ausgebildete Verarbeitungseinheit VE1 der Auswerteeinheit AE gesendet. Anstelle eines Funksystems mit zwei Funkkanälen (FDM, Frequency Division Multiplexing) kann auch TDM (Time Division Multiplexing) oder CDM (Code Division Multiplexing) eingesetzt werden.

Die über Funk empfangenen sicherheitsgerichteten Signale werden durch die in der Auswerteeinheit AE1 integrierte Verarbeitungseinheit VE1 mittels des Mikrokontrollers MCA mindestens zweikanalig logisch verknüpft. Auf der Grundlage des Ergebnisses der logischen Verknüpfung wird sodann ein Ausgangssignal FGS zur Freigabe einer gefahrbringenden Aktion gesetzt oder das Freigabesignal zurückgenommen, um die Aktion zu stoppen.

Im so genannten Ruhestromprinzip werden mehrere sicherheitsgerichtete Signale, zum Beispiel Zustände von Kontakten der Schaltgeräte SG1, SG2, die beispielsweise als Zustimmungsschalter oder als NOT-HALT-/ NOT-STOPP-Befehlsgerät ausgebildet sind, von den Erfassungseinheiten EE1, EE2 jeweils mindestens zweikanalig erfasst und zyklisch, zum Beispiel alle 25 ms im Multiplexverfahren über die Funkstrecken FS 1, FS2 zur Auswerteeinheit AE1 übertragen.

Das Zeitverhalten bei der Kommunikation mit den Erfassungseinheiten EE1, EE2 wird durch die Auswerteeinheit AE1 vorgegeben. Die Erfassungseinheiten EE1, EE2 werden nacheinander unter Verwendung einer eindeutigen Identifizierung ID1, ID2 von der Auswerteeinheit AE1 abgefragt (Polling). Die jeweils adressierte Erfassungseinheit EE1, EE2 antwortet auf die Abfrage innerhalb eines vorgegebenen Zeitfensters von zum Beispiel 2,5 ms +/- 0,5 ms.

Die Auswerteeinheit AE1 prüft die empfangenen sicherheitsgerichteten Signale bzw. Daten und führt eine logische Verknüpfung der Signale durch und/oder gibt diese über die Ein-/Ausgabeeinheit IO aus. Die logische Verknüpfung erfolgt sicherheitsgerichtet, das heißt, dass das Ausgangssignal (FGS) sicherheitsgerichtet abgeschaltet wird, wenn beispielsweise eine Zustimmung eines Zustimmungsschalters fehlt oder ein NOT-HALT- / NOT-STOPP-Befehlsgerät betätigt wurde oder wenn über einen bestimmten Zeitraum keine Antwort von einer oder mehreren Erfassungseinheiten EE1, EE2 empfangen wird.

In sicherheitskritischen Anlagen-/Maschinenbereichen werden als Erfassungseinheiten beispielsweise Zustimmungsschalter eingesetzt, deren Aktivierung für das Einleiten einer gefahrbringenden Bewegung erforderlich ist.

Beim Einsatz des drahtlosen Zustimmungsschalters EE1, EE2 kann die Betätigung an der Position erfolgen, an der die gefahrbringende Bewegung der Anlage bzw. Maschine am besten einsehbar ist.

Kann nun der Bereich, in dem die gefahrbringende Bewegung ablaufen soll, nicht komplett von einer Person eingesehen werden, sind gegebenenfalls mehrere Beobachter erforderlich.

Durch die oben beschriebene Erfindung wird die Möglichkeit gegeben, dass erst nach Zustimmung aller Beobachter, beispielsweise durch logische UND-Verknüpfung die gefahrbringende Bewegung freigegeben wird.

Es ist nun erstmals möglich, mehrere sicherheitsgerichtete Signale über das einzige Funksystem FS zu übermitteln und-die sicherheitsgerichteten Signale in einer geeigneten Art und Weise logisch zu verknüpfen.

Fig. 2 zeigt rein schematisch ein Funksystem SYS2 zur Übertragung sicherheitsgerichteter Signale von einer Erfassungseinheit EE3 zu einer Auswerteeinheit AE2, wobei zur flexiblen Optimierung des Wirkungsbereichs des sicherheitsgerichteten Funksystems SYS2 Transceivereinheiten TRA1...TRAN über ein Bussystem BUS mit der Verarbeitungseinheit VE2 (Basisstation) verbunden sind und ihrerseits über Funkstrecken FS1, FS2... FSn mit der zumindest einen Empfangseinheit EE3 gekoppelt sind.

Bei dem in Fig. 2 dargestellten Funksystem SYS2 kommunizieren ein oder mehrere Erfassungseinheiten EE3, welche als Mobilstationen ausgebildet sind, über Funkstrecken FS1, FS2...FSn mit der Auswerteeinheit AE2, umfassend die fest installierte Verarbeitungseinheit VE2 (Basisstation) sowie örtlich abgesetzte Transceivereinheiten TRA1...TRAn.

Die Funkausleuchtung des Funksystems SYS2 wird durch die räumlich von der Verarbeitungseinheit VE2 (Basisstation) abgesetzten Transceivereinheiten TRA1, TRA2...TRAn flexibel an die Umgebung angepasst.

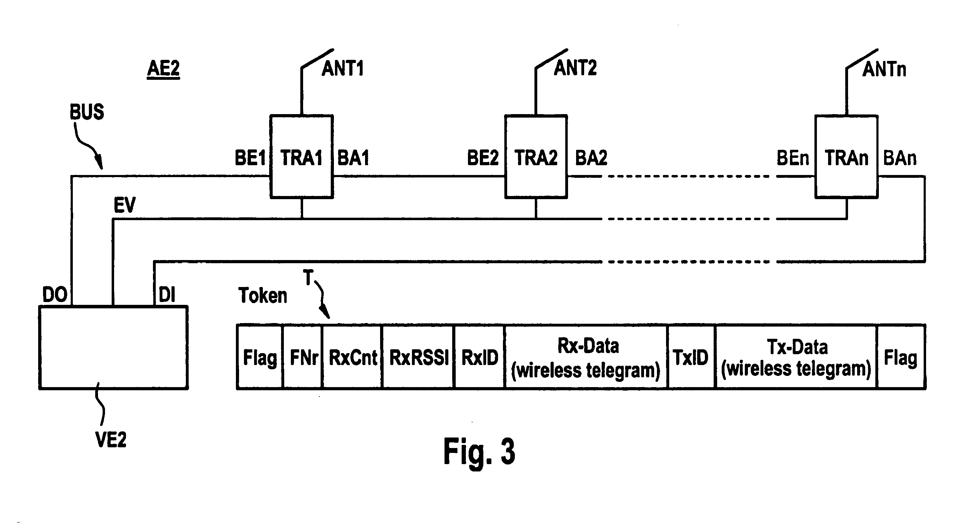

Fig. 3 zeigt die Anbindung der Transceivereinheiten TRA1...TRAn über den als Ringbus ausgebildeten Bus BUS an die Verarbeitungseinheit VE2 (Basisstation) der Auswerteeinheit AE2. Jeder der Transceiver TRA1...TRAn umfasst eine Antenne ANTI, ANT2...ANTn sowie jeweils einen Buseingang BE1...BEn und einen Busausgang BA1...BAn. Ebenfalls weist die Verarbeitungseinheit (Basisstation) VE2 einen Datenausgang DO sowie einen Dateneingang DI auf, die jeweils mit Enden des Ringbusses BUS verbunden sind. Zur Energieversorgung der Transceivereinheiten sind diese über eine Energieversorgungsleitung EV mit der Verarbeitungseinheit (Basisstation) VE2 oder einer dezentralen Versorgung verbunden.

Durch die räumlich abgesetzten Transceiver TRA1...TRAn besteht die Möglichkeit einer Aufbereitung der empfangenen Funksignale, dass diese über größere Entfernungen zur Verarbeitungseinheit (Basisstation) VE2 weitergeleitet werden können. In den ringförmigen Bus BUS können beliebig viele Transceiver TRA1...TRAn kaskadiert eingeschaltet werden. Der Bus BUS selbst kann als optischer oder elektrischer Bus ausgebildet sein.

Es ist vorgesehen, dass die Verarbeitungseinheit (Basisstation) dadurch entlastet wird, dass sie nur mit dem Transceiver TRA1...TRAn mit der höchsten Sende- / Empfangsqualität kommuniziert.

Zunächst soll der Empfang eines Empfangstelegramms RxT durch die Auswerteeinheit AE2 beschrieben werden. Hierzu ist vorgesehen, dass die Verarbeitungseinheit (Basisstation) VE2 zyklisch z. B. alle 25 ms einen in Fig. 3 dargestellten Rahmen (TOKEN) T in den Ringbus BUS sendet. Der Token T passiert mit einer definierten Laufzeit nacheinander alle Transceivereinheiten TRA1...TRAn. Der in Fig. 3 dargestellte Token T ist vorzugsweise derart aufgebaut, dass dieser ein Flag FLAG, eine Flagnummer FNR, einen Empfangs-Zähler RxCNT, einen Empfangs-Qualitätsindex RxRSSI, eine Empfangskennung RxID, Empfangs-Daten Rx-DATA, eine Senderkennung TxID, Sende-Daten Tx-DATA sowie ein End-Flag FLAG aufweist.

Wenn der Token T nacheinander die Transceiver TRA1...TRAn passiert, inkrementiert jede Transceivereinheit den Empfangs-Zähler RxCNT im Header.

Schließlich wird der Token T von jeder Transceivereinheit TRA1...TRAn bearbeitet, welche ein gültiges Funktelegramm empfangen hat. Die erste Transceivereinheit, welche ein gültiges Funktelegramm empfangen hat, trägt die empfangenen Daten RxDATA in den Token T ein. Ferner wird der Empfangs-Qualitätsindex RxSSI und die Empfangskennung RxID ersetzt, sofern die eigene Empfangsqualität höher als die eingetragene ist. Folglich erhält der Token T nach Durchlauf der Transceiver TRA1...TRAx die empfangenen Daten der Transceivereinheit, welche den höchsten Empfangs-Qualitätsindex RxRSSI aufwies.

Das Senden eines Telegramms erfolgt durch einen einzigen Transceiver TRAx, indem die Verarbeitungseinheit (Basisstation) VE2 in dem Feld der Senderkennung TxID die Modulkennung RxID des Transceivers mit der höchsten Empfangsqualität des letzten empfangenen Tokens T einträgt. Der Transceiver TRAx, dessen Identifizierung ID in der Modulkennung TxId eingetragen ist, sendet dann das Telegramm Tx-DATA.

Für eine optimale Funkausleuchtung kann die Ringstruktur des Busses BUS nahezu beliebig erweitert werden. Auch kann eine dezentrale Spannungsversorgung für die Transceiver TRA1...TRAn bei vollständiger galvanischer Entkopplung realisiert werden. Die Transceiver TRA1...TRAn können auf unterschiedlichen Funkkanälen betrieben werden, z. B. für: a) redundante Übertragung auf zwei Funkkanälen, b) mehrere Erfassungseinheiten EE1...EEn an einer Auswerteeinheit AE, c) zusätzliche Aktoren / Sensoren an einer Auswerteeinheit AE und d) bidirektionale sicherheitsgerichtete Übertragung zwischen zwei Auswerteeinheiten AE1, AE2.

Durch die Verwendung mehrerer Transceiver TRA1...TRAn kann die Funkausleuchtung den örtlichen Gegebenheiten angepasst werden. Zur Vermeidung von Dämpfungsverlusten bei der Weiterleitung der hochfrequenten Funksignale von der Verarbeitungseinheit (Basisstation) VE2 zu den Transceivern TRA1...TRAn und umgekehrt, wie sie z. B. bei einer reinen Antennendiversität auftreten, werden bei dem beschriebenen Verfahren die Funksignale von den Transceivern aufbereitet und in digitaler Form über das Bussystem BUS ausgetauscht. Das System ist aufgrund der hohen Flexibilität insbesondere zur Verwendung in stark EMV-belasteter Umgebung geeignet.

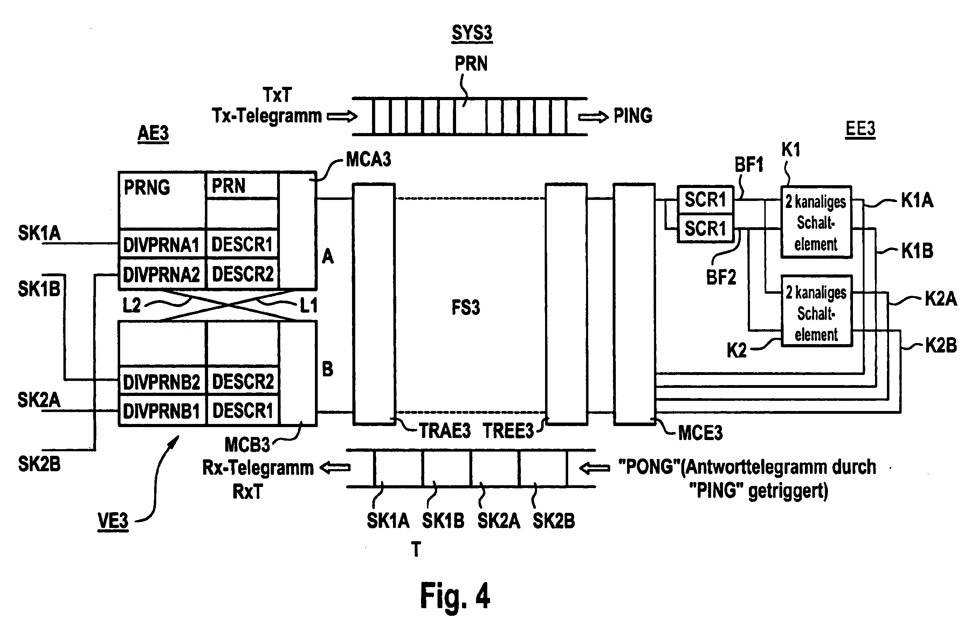

Fig. 4 zeigt den prinzipiellen Aufbau eines Funksystems SYS3 zur Übertragung sicherheitsgerichteter Signale von einer Erfassungseinheit EE3 über eine Funkstrecke FS3 an eine Auswerteeinheit AE3.

Gemäß eines eigenständigen Gedankens zeichnet sich das nachfolgend beschriebene Verfahren zum Erfassen und Übertragen sicherheitsgerichteter Signale über die Funkstrecke FS3 dadurch aus, dass die Erfassungseinheit EE3 (Mobilstation) die sicherheitsgerichteten Signale mindestens zweikanalig erfasst und an die sichere, mindestens zweikanalige Verarbeitungseinheit (Basisstation) VE3 in der Auswerteeinheit AE3 sendet. Bei der vorliegenden Ausführungsform ist die Verarbeitungseinheit (Basisstation) VE3 zweikanalig ausgebildet und umfasst einen ersten Kanal A mit einem Mikrocomputer MCA3 und einen zweiten Kanal B mit einem Mikrocomputer MCB3. Der Mikrocomputer MCA3 weist einen Zufallszahlengenerator PRNG auf, zur Erzeugung von Pseudo-Zufallszahlen PRN. Ferner umfassen die Mikrokontroller MCA3 und MCB3 jeweils Einheiten DIVPRNA1, DIVPRNA2 sowie DIVPRNB1, DIVPRNB2 zur Überprüfung der empfangenen Pseudo-Zufallszahlen PRN und Freigabe entsprechender Signale SK1A, SK1B, SK2A sowie SK2B zugehöriger Kontakte K1A, K1B; K2A, K2B, welche an der Erfassungseinheit EE3 angeschlossen sind und von dieser überwacht werden.

Die Mikrokontroller MCA3 und MCB3 sind über Leitungen L1, L2 zum kreuzweisen Datenvergleich miteinander verbunden.

Ferner ist mindestens einer der beiden Mikrokontroller MCA3, MCB3 mit einer Sende-/Empfangseinheit wie Transceiver TRAE3 gekoppelt.

Die Erfassungseinheit EE3 umfasst ebenfalls einen Mikrokontroller MCE3 zur Steuerung der Erfassung von beispielsweise zwei zweikanaligen Schaltelementen K1, K2. Jedes Schaltelement K1, K2 weist zwei Schaltkontakte K1A, K1B bzw. K2A bzw. K2B auf, deren Kontaktzustände eingelesen werden. Ein Ausgang des Mikrokontrollers MCE3, an dem die empfangene Pseudo-Zufallszahl PRN anliegt, ist mit jeweils einem Eingang eines Scramblers SCR1, SCR2 verbunden. Ein Ausgang des Scramblers SCR1 ist mit einem Eingang des ersten Kontaktes K1A des Schaltelementes K1 und mit dem Eingang des ersten Kontaktes K2A des zweiten Schaltelementes K2 verbunden. Ein Ausgang des Scramblers SCR2 ist mit dem Eingang des zweiten Kontaktes K1B des Schaltelementes K1 und mit dem Eingang des zweiten Kontaktes K2B des Schaltelementes K2 verbunden. Die jeweiligen Ausgänge der Kontakte K1A, K1B, K2A sowie K2B sind mit weiteren Eingängen des Mikrokontrollers MCE3 verbunden. Der Mikrokontroller MCE3 ist über-den Transceiver TREE3 -mit-der-Funkstrecke FS3 gekoppelt.

Nachfolgend wird die Funktion des Funksystems SYS3 erläutert. Der Zufallszahlengenerator PRNG erzeugt Pseudo-Zufallszahlen PRN, die z.B. von dem Mikrokontroller MCA3 in ein Sende-Telegramm TxT eingetragen werden. In der Empfangseinheit EE werden die ankommenden Zufallszahlen PRN über zwei verschiedene vorzugsweise Hardware-/Software- Scrambler SCR1, SCR2 geleitet. An den Ausgängen des Scrambler SCR1, SCR2 liegen Bitmuster bzw. jeweils Testsequenzen als binäre Testmuster bzw. Bitfolgen BF1, BF2 an, die zum dynamischen Testen bzw. Abfragen der zweikanaligen Schaltelemente K1 K2 bzw. der Schaltkontakte K1B, K1B, K2A, K2B verwendet werden. Die über die Schaltkontakte K1A, K1B, K2A, K2B geführten Bitfolgen werden dem Mikrokontroller MC zugeführt und über den Transceiver TREE3 an die Auswerteeinheit AE3 gesendet. Das Sendetelegramm RxT enthält die Bitfolgen der einzelnen Kontakte.

Einer der Mikrokontroller, z.B. MCB3 empfängt das Sendetelegramm RxT und leitet dieses zur parallelen Überprüfung an den Mikrokontroller MCA3 weiter. Es erfolgt eine zweikanalige Auswertung, wobei jeder Mikrokontroller MCA3, MCB3 Schaltkontakte K1A, K1B, K2A, K2B der zweikanaligen Schaltelemente K1 K2 auswertet. In den in den jeweiligen Mikrokontrollern MCA, MCB enthaltenen Descramblern DESCR1, DESCR2 erfolgt ein Descrambling der Bitfolgen BF1, BF2, wonach anschließend geprüft wird, ob das Ergebnis bei geschlossenem Schaltkontakt K1A, K1B, K2A, K2B mit der ursprünglichen Zufallszahl PRN übereinstimmt. Falls eines der beiden Ergebnisse nicht mit dem Testmuster, d. h. der Zufallszahl PRN übereinstimmt, d. h. auch bei geöffneten Schaltkontakten des Schaltelementes, wird dieses Signal sicherheitsgerichtet abgeschaltet.

In einer optionalen Ausbaustufe kann das sicherheitsgerichtete Abschalten bei geöffneten Schaltkontakten eines Schaltgeräts mit dem gleichzeitigen Abschalten anderer über die Funkstrecke übertragener sicherheitsgerichteter und nichtsicherheitsgenchteter Signale gekoppelt werden.

Dem System SYS3 liegen folgende Überlegungen zugrunde:
- Das System darf nicht gefahrbringend ausfallen, d. h. es darf kein geöffneter Kontakt als geschlossen erkannt werden und
- damit ein geöffnetes, zweikanaliges Schaltgerät als geschlossen erkannt wird, müssen folgende Voraussetzungen gleichzeitig erfüllt sein:
- im Sende-Telegramm RxT müssen die Daten beider Kontakte bzw. Kanäle K1A und K1B bzw. K2A und K2B eines Schaltelementes K1 bzw. K2 so verfälscht werden, dass sie beide nach den Descramblern DESCR1, DESCR2 mit der ursprünglichen Zufallszahl PRN übereinstimmen
- die Wahrscheinlichkeit hierfür ist maßgeblich von der Länge der Zufallszahl PRN bzw. Bitfolge BF1/BF2 abhängig. Durch geeignete Wahl der Länge kann die für die jeweilige Anwendung erforderliche Restfehlerwahrscheinlichkeit (z.B. <10⁻⁷) erreicht werden.
- mit einer 24-Bit-Zufallszahl bzw. Bitfolge, die eine Hamming Distanz von Hd = 12 aufweist, beträgt die Wahrscheinlichkeit eines gefahrbringenden Ausfalls pro Stunde beispielsweise ca. 1,4 x 10⁻¹⁰ bei einer angenommenen Bitfehlerrate auf der Funkstrecke von 10⁻² und einem Telegrammzyklus von ca. 25 ms.

Auch hängende bzw. klebende Schaltkontakte des zweikanaligen Schaltgeräts K1, K2 würden spätestens bei der nächsten Betätigung sicher detektiert werden.

Durch obiges Verfahren wird die Möglichkeit eröffnet, dass die Bitfolgen BF1, BF2, die auch als Prüfbits bezeichnet werden können, in geeigneter Weise so gewählt werden, dass sie direkt als Testmuster zur Erfassung der Signale verwendet werden können und dass das Ergebnis, d. h. die mit Hilfe der Testmuster erzeugten Signale SK1A, SK1B, SK2A, - SK2B ohne weitere Nachbearbeitung sicher über- die Funkstrecke FS3 übertragen werden können, d. h. unter Einhaltung der geforderten maximalen Restfehlerrate übertragen werden können. Des Weiteren erfolgt die Auswahl des verwendeten Testmusters BF1, BF2 dynamisch durch die Auswerteeinheit AE3, so dass die Erfassungseinheit EE in einfachster Art und Weise aufgebaut werden kann und die notwendige und sichere und zweikanalige Auswertung ausschließlich in der Auswerteeinheit AE erfolgt.

Wie bereits zuvor erläutert, werden die Testsequenzen bzw. Bitfolgen BF1, BF2 über die Zufallszahl PRN von der Auswerteeinheit AE3 dynamisch vorgegeben.

Zur Reduzierung des zu übertragenden Datenvolumens übermittelt die Auswerteeinheit AE3 lediglich eine Zufallszahl PRN bzw. Sequenznummer, wobei die Erfassungseinheit EE3 daraus eindeutige Bitfolgen BF1, BF2 für jeden angeschlossenen Schaltkontakt K1A, K1B, K2A, K2B, d. h. mindestens zweikanalig generiert. Die Bitfolgen BF1, BF2 zum Erfassen der sicherheitsgerichteten Signale werden mindestens zweikanalig durch Scrambling, Code-Spreizung oder anhand von Look-Up-Tabellen in Hard-/ oder Software erzeugt.

Wie bereits zuvor erläutert, ist es von Vorteil, zur Erfassung der mindestens zweikanaligen Signale für jeden Kanal K1A, K1B bzw. K2A, K2B eine separate Bitfolge BF1, BF2 zu verwenden.

Gemäß eines Vorschlags ist vorgesehen, dass das aus der Testung ermittelte mindestens zweikanalige Signal eine einzige Information darstellt, die einkanalig zur Auswerteeinheit AE übertragen wird.

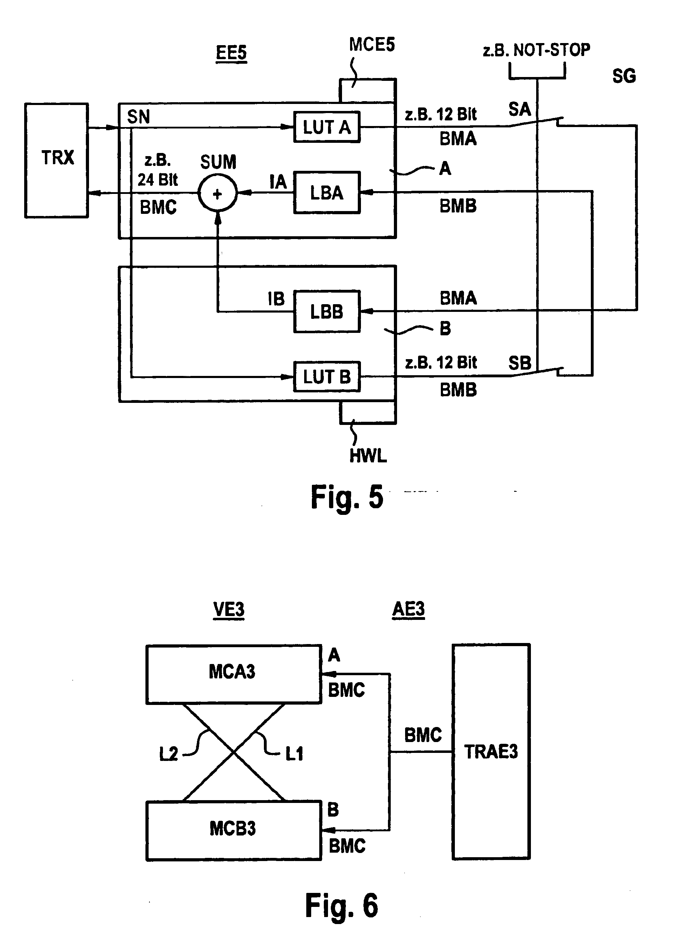

Dieses Verfahren soll anhand der Fig. 5 erläutert werden. Fig. 5 zeigt das Blockschaltbild einer Erfassungseinheit EE5. Zur Erfassung der Zustände von Kontakten SA, SB eines zweikanaligen Schaltgerätes sowie NOT-STOP ist die Erfassungseinheit EE5 zweikanalig ausgebildet, und umfasst einen Kanal A sowie einen Kanal B. Der Kanal A ist als Mikrokontroller MCE5 realisiert, auf dem eine Logik LBA als Software implementiert ist. Der Kanal B ist als Hardware-Logik HWL realisiert, vorzugsweise als frei programmierbarer Logik-Baustein wie CPLD oder FPGA. Ferner ist ein Transceiver TRX zur Ankopplung des Mikrokontrollers MCE5 an die Funkstrecke FS vorgesehen. Anhand einer von der Auswerteeinheit AE1...AE3 über die Funkstrecke FS übertragenen Sequenznummer SN werden in den Look-Up-Tabellen LUTA, LUTB Testsequenzen wie binäre Testmuster bzw. Bitmuster BMA, BMB erzeugt, die über die Schaltkontakte SA, SB geleitet werden. Mit den binären Testmuster BMA, BMB werden die Kontaktzustände der angeschlossenen Schaltkontakte SA, SB geprüft.

Die über die Schaltkontakte SA, SB des zweikanaligen Schaltelementes NOT-STOP geführten Bitmuster BMA, BMB durchlaufen jeweils einen Logikblock LBA, LBB des anderen Kanals, wobei die durch einen geöffneten Kontakt SA, SB oder durch beide geöffnete Kontakte SA, SB erzeugte und für die Übertragung ungeeignete "Dauerlage-0" durch spezielle Bitmuster IA, IB ersetzt wird. Abschließend werden die beiden Bitmuster zu einer Information bzw. einem Bitmuster BMC zusammengefügt wie addiert und über den Transceiver und die Funkstrecke zur Auswerteeinheit übermittelt.

Fig. 6 zeigt ein Blockschaltbild der Auswerteeinheit AE3. Diese umfasst den Transceiver TRAE3 sowie die zweikanalige Verarbeitungseinheit VE3 umfassend Mikrokontroller MCA3 (Kanal A) und den Mikrokontroller MCB3 (Kanal B). Eine Empfangseinheit des Transceivers leitet die komplette Information BMC zu beiden Mikrokontrollern MCA3, MCB3 weiter. Es erfolgt eine redundante Verarbeitung unter Einbeziehung eines kreuzweisen Vergleichs der Ergebnisse. Wie bereits zuvor erwähnt, sind die Mikrokontroller MCA3, MCB3 der Auswerteeinheit AE3 kreuzweise über Leitungen L1 L2 miteinander gekoppelt, um den kreuzweisen Vergleich der Ergebnisse durchzuführen.

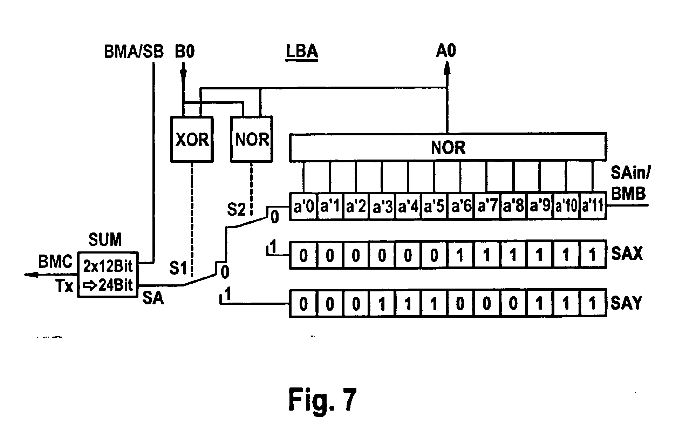

Fig. 7 zeigt ein Blockschaltbild des Logikblocks LBA, LBB gemäß Fig. 5.

Die Logikblöcke LBA, LBB sind von ihrem Aufbau her identisch, so dass nachfolgend der Aufbau des Logikblocks LBA erläutert wird. Dieser umfasst u. a. ein Schieberegister SRA zum Einlesen des Bitmusters BMA; SAin, welches über den Schaltkontakt SB geleitet wurde. An einem parallelen Ausgang des Schieberegisters ist ein Prüfblock NOR zur Erkennung einer "Dauerlage-0" (geöffneter Kontakt) geschaltet, dessen Ausgang auf eine Kombinationslogik XOR, NOR zur Steuerung der Schaltelemente S1 und S2 geschaltet ist. Die Schaltelemente S1 und S2 ersetzen eine eingelesene "Dauerlage-0" in Abhängigkeit vom anderen Kanal (Kanal B, Signal B0) durch spezielle Bitmuster (SAX, SAY).

In der Kombinationslogik XOR, NOR wird überprüft, ob alle Bits von beiden Schaltkontakten SA, SB gleich "0" sind. Bejahendenfalls wird das eingelesene Bitmuster BMA durch das spezielle Bitmuster SAX ersetzt.

Sofern nur ein Kontakt SA, SB als geöffnet erkannt wurde, wird dieser Zustand der Auswerteeinheit AE durch Übermittlung der Information SAY (und der Information SBY des Logikblocks LBB) mitgeteilt, beispielsweise ein Fehlerzustand wie "Kontakt hängt" oder "Übergangsphase beim Betätigen des Schaltgeräts".

Sind beide Kontakte SA, SB geschlossen, werden die zurückgelesenen Testmuster BMA, BMB durch Aneinanderhängen in dem Summierer SUM zu einer Information BMC kombiniert, die beispielsweise der Information "NOT-HALT / NOT-STOP nicht betätigt" entspricht.

Die in der Fig. 5 dargestellte Struktur der Erfassungseinheit EE5 eröffnet die Möglichkeit zur zwei- oder mehrkanaligen Erfassung und/oder Verarbeitung sicherheitsgerichteter Signale, die sich dadurch auszeichnet, dass die Erfassung und/oder Verarbeitung eines mindestens zweikanaligen Signals, beispielsweise die von den Schaltkontakten SA, SB ausgehenden Bitmuster BMA, BMB in Software und Hardware erfolgt. Hierzu ist vorgesehen, dass jeweils ein Kanal, beispielsweise Kanal A als Software-Kanal, realisiert durch den Mikrocomputer MCE5 aufgebaut ist, während der Kanal B als Hardware-Kanal HWL als frei programmierbarer Logikbaustein wie CPLD oder FPGA aufgebaut ist.

Zur Aufdeckung von Fehlern in der Hardware und/oder Software in der Erfassungseinheit EE5 sendet die Auswerteeinheit AE in festgelegten Zeitabständen zusätzlich Test-Sequenznummern SN, denen in den Look-Up-Tabellen LUTA, LUTB der Erfassungseinheit spezielle Testmuster zugeordnet sind, die einen geöffneten Kontakt (Kanal A oder B) oder zwei geöffnete Kontakte (Kanal A und B) simulieren. Durch die Erwartungshaltung der Auswerteeinheit können damit Fehler in den Logikblöcken LBA, LBB aufgedeckt werden.

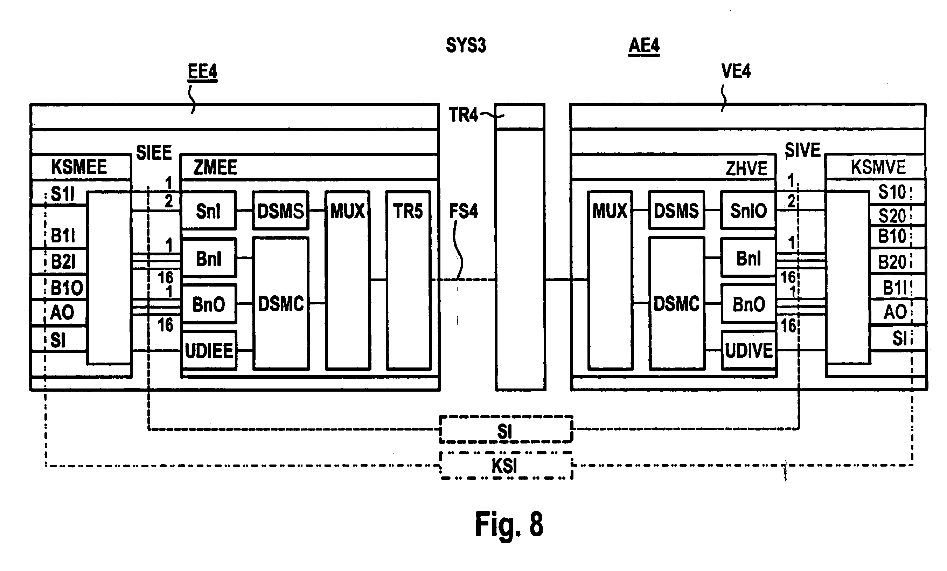

Ein Beispiel bezieht sich des Weiteren auf ein in Fig. 8 dargestelltes System SYS3 zur Übertragung sicherheitsrelevanter Daten zwischen einer Erfassungseinheit EE4 und einer Auswerteeinheit AE4 über eine Funkstrecke FS4. Die Auswerteeinheit AE4 umfasst eine Verarbeitungseinheit VE4 und einen örtlich abgesetzten Transceiver TRA4.

Die als Mobilstation ausgebildete Erfassungseinheit EE4 umfasst ein zertifiziertes Modul einer Erfassungseinheit ZMEE, mit einem Standard-Interface SIEE, mit sicherheitsgerichteten Eingängen SnI, betriebsmäßigen Eingängen BnI, betriebsmäßigen Ausgängen BnO sowie einem universellen Daten-Interface UDIEE. Die sicherheitsgerichteten Eingänge SnI sind über ein Datensicherungsmodul DSMS für sicherheitsgerichtete Daten mit einem Multiplexer/ Demultiplexer MUX verbunden. Die betriebsmäßigen Eingänge BnI sowie das Interface für die betriebsmäßigen Ausgänge BnO und das universelle Daten-Interface UDIEE sind mit einem Datensicherungsmodul DSMC für Steuerungsdaten verbunden. Ausgangseitig ist das Datensicherungsmodul für Steuerungsdaten mit einem zweiten Eingang des Multiplexer/ Demultiplexer MUX verbunden. Ein Ausgang des Multiplexers/ Demultiplexers MUX ist mit einer Sende-/ Empfangseinheit TRE5 verbunden, über die Signale über die Funkstrecke FS4 zu dem Transceiver TRA4 übertragen oder empfangen werden können.

Die Verarbeitungseinheit VE4 umfasst ebenfalls ein zertifiziertes Modul einer Verarbeitungseinheit ZMVE, welches ausgangseitig ein Standard-Interface SIVE aufweist. Dieses umfasst sicherheitsgerichtete Ein-/ Ausgänge SnIO, betriebsmäßige Eingänge BnI, betriebsmäßige Ausgänge BnO sowie ein universelles Dateninterface UDIVE. Das Interface SnIO ist über ein Datensicherungsmodul DSMC für sicherheitsgerichtete Daten mit einem Multiplexer/ Demultiplexer MUX verbunden. Die Schnittstellen BnI, BnO sowie UDIVE sind über ein Datensicherungsmodul DSMC für Steuerungsdaten mit einem zweiten Eingang des Multiplexers/ Demultiplexers MUX verbunden, dessen Ausgang mit dem Transceiver TR4 zum Senden und/oder Empfangen von Daten verbunden ist.

Die zertifizierten Module ZMEE sowie ZMVE zeichnen sich gegenüber dem Stand der Technik dadurch aus, dass diese neben den üblichen sicherheitsgerichteten Eingängen SnI, sicherheitsgerichteten Ausgängen SnO und betriebsmäßigen Ein- und Ausgängen BnI, BnO die universellen Daten-Interfaces UDIEE sowie UDIVE aufweisen. Nach dem Stand der Technik war es nicht möglich, mittels eines zertifizierten Moduls kundenspezifische Daten wie digitale oder analoge Eingangs-/ Ausgangsdaten bzw. serielle Daten zu verarbeiten.

Es ist vorgesehen, dass das zertifizierte Modul ZMEE, ZMVE das universelle Daten-Interface UDIEE, UDIVE zur Übertragung nicht-sicherheitsrelevanter, kundenspezifischer Daten zur Verfügung stellt.

Ferner ist vorgesehen, dass das Standard-Interface SIEE, SIVE mit einem kundenspezifischen Modul KSMEE, KSMVE verbunden ist, welches ausgangsseitig ein kundenspezifisches Interface KSIEE, KSIVE zur Verfügung stellt. Neben den sicherheitsgerichteten Ein- und Ausgängen S1I, S1O oder betriebsmäßigen Ein- und Ausgängen B1I, B2I, B1O, B2O stehen auch analoge Ausgänge AO wie analoger Spannungsausgang oder serielle Schnittstellen SI wie beispielsweise RS232 zur Verfügung, welche sodann über das universelle Dateninterface UDIEE, UDIVE der zertifizierten Einheit ZMEE/ ZM verarbeitet werden.

Das Standard-Interface SIVE der zertifizierten Erfassungseinheit ZVE ist ausgangseitig mit dem kundenspezifischen Modul KSMVE verbunden, an dessen Ausgang das kundenspezifische Interface KSI zur Verfügung steht. Dieses stellt insbesondere sicherheitsgerichtete Ausgänge S1O, S2O sowie betriebsmäßige Ein- und Ausgänge B1O, B2O sowie B1I zur Verfügung. Auch können-analoge Ausgänge AO wie analoger Spannungsausgang sowie eine serielle Schnittstelle SI wie beispielsweise RS232 zur Verfügung gestellt werden.

Das Systems SYS3 ermöglicht daher die flexible Übertragung auch Applikations-spezifischer Daten über sicherheits-zertifizierte Module. Durch das kundenspezifische Modul KSMEE, KSMVE in Verbindung mit dem universellen Daten-Interface UDIEE, UDIVE welches jeweils in den zertifizierten Modulen ZMEE, ZMVE integriert ist, wird eine festgelegte oder auch eine variable Bandbreite (Tunnel) zur transparenten Übertragung nicht-sicherheitsrelevanter Daten zur Verfügung gestellt.

Das universelle Daten-Interface UDIEE, UDIVE kann an eine jeweilige Applikation angepasst werden, sowohl hard- als auch softwaremäßig. Die Änderungen haben jedoch keinen Einfluss auf den sicherheits-zertifizierten Teil des Systems.

Gemäß einer bevorzugten Ausführungsform werden die Daten des universellen Interfaces UDI durch vorgeschaltetes Multiplexing der Multiplexer/ Demultiplexer MUX in Hardware oder durch Auspacken aus einem Übertragungsprotokoll in Software eingefügt bzw. entnommen.

Es werden zertifizierte Erfassungseinheiten bzw. zertifizierte Verarbeitungseinheiten ZMEE, ZMVE zur Verfügung gestellt, die standardmäßig das universelle Daten-Interface UDIEE, UDIVE aufweisen, welches durch Hard- und/oder Software-Baugruppen wie beispielsweise die kundenspezifischen Module KSMEE, KSMVE an verschiedenste kundenspezifische Applikationen angepasst werden können.

Bei der Zertifizierung der Module ZMEE, ZMVE mit sicherheitsgerichteten Funktionen wird angenommen, dass jeder mögliche Fehler-Zustand am universellen Daten-Interface UDI auftreten kann, sodass eine Beeinflussung der sicherheitsgerichteten Funktionen durch die Einschaltung weiterer kundenspezifischer Schaltungsteile KSMEE, KSMVE zur Anpassung und Nutzung des universellen Daten-Interfaces UDI ausgeschlossen werden kann.

Somit ist bei kundenspezifischen Erweiterungen/ Änderungen am universellen Interface UDI keine Neu-Zertifizierung erforderlich.

### Maßnahmen zur Fehlerbeherrschung:

Grundsätzlich wird die Sicherheitsfunktion in der Basisstation realisiert. In der Mobilstation sind zusätzliche Maßnahmen zur Erkennung und Übermittlung besonderer Zustände implementiert. Diese Maßnahmen (Logikblöcke und/oder Software-Routinen) sind zweikanalig vorhanden und werden zyklisch durch die Auswerteeinheit (Basisstation) getestet.

### - Bitfehler auf der Funkstrecke:

Die Basisstation schaltet sicherheitsgerichtet ab, wenn das empfangene Code-Wort nicht dem Spreiz- / Scramble-Code der vorgegebenen Sequenz entspricht. Alle verwendeten Codes weisen untereinander eine minimale Hamming-Distanz von Hd = 12 auf. Nach GS-ET-26 ergibt sich damit:

| | | |
|---|---|---|
| Restfehlerwahrscheinlichkeit (Gauß) | R(p) | = 2,42E-18 |
| Gefährliche Versagensrate pro Stunde | AU | = 1,3936E-10 |

Die Anforderungen an die Restfehlerwahrscheinlichkeit für Performance Level e nach DIN EN ISO 13849-1 werden damit erfüllt.

### - Fehler, dass ein Kontakt nicht öffnet:

Der geöffnete Kontakt "ersetzt" das 12 Bit Testmuster durch Nullen. Über den geschlossenen Kontakt wird das 2. Testmuster zurückgelesen. Beim Zusammensetzen der beiden eingelesenen Code-Wortanteile würde ein ungültiges Code-Wort, d.h. ein Code-Wort mit Hd < 12 erzeugt werden. In der Erfassungseinheit (Mobilstation) wird daher das "ungültige Code-Wort" durch ein spezielles Code-Wort ("1 Kontakt geöffnet / 1 Kontakt geschlossen") mit Hd = 12 ersetzt. Die BS schaltet beim Erhalt dieses CodeWorts sicherheitsgerichtet ab.

### - Fehler in den Logikblöcken der Erfassungseinheit:

Die Basisstation sendet-in festgelegten zeitlichen Abständen Test-Sequenznummern, die die Simulation eines oder zweiter geöffneter Kontakte auslösen. Die Simulation erfolgt dadurch, dass als Testmuster eines oder beider Kanäle eine "Dauerlage-0" ausgewählt wird. Durch die Erwartungshaltung der Basisstation können damit Fehler in den Logikblöcken der Mobilstation zuverlässig aufgedeckt werden.

### - Kurzschluss zwischen Aus- und Eingängen der Pins zu den Kontakten:

Da das Ausgeben der Testmuster und das Einlesen der über die Kontakte geführten Bitmuster über getrennte Bauteile (CPLD und µC) erfolgt, können unerkannte Kurzschlüsse zwischen Ein- und Ausgang eines Bauteils bei der Fehleranalyse ausgeschlossen werden.

## Patentansprüche

1. Verfahren zur Erfassung, Übertragung und Auswertung zumindest eines sicherheitsgerichteten Signals (S1...Sn), wobei das sicherheitsgerichtete Signal (S1...Sn) mit zumindest einer Erfassungseinheit (EE1 ...EEn) erfasst und über ein Funksystem (FS) an zumindest eine Auswerteeinheit (AE2) übertragen wird,
**dadurch gekennzeichnet,**
**dass** das von der zumindest einen Erfassungseinheit (EE1...EEn) ausgesendete sicherheitsgerichtete Signal (S1...Sn) über räumlich verteilt angeordnete Transceivereinheiten (TRA1...TRAn) empfangen wird, wobei die Transceivereinheiten über ein Bussystem (BUS) mit einer Verarbeitungseinheit (VE2) (Basisstation) der Auswerteeinheit (AE2) verbunden sind, dass die Verarbeitungseinheit (VE2) (Basisstation) zyklisch vorzugsweise alle 25 ms ein Telegramm in Form eines Rahmens (TOKEN) in den ringförmigen Bus (BUS) sendet und dass der Rahmen (TOKEN) von jeder Transceivereinheit (TRA1....TRAn), welche ein gültiges Funktelegram empfangen hat; bearbeitet wird, wobei eine erste solche Transceivereinheit (TRA) die empfangenen Daten sowie einen RSSI-Wert oder einen anderen Qualtitätsindex in den Rahmen (TOKEN) einträgt und wobei von jeder solchen Transceivereinheit (TRA) der Qualitätsindex und optional eine Empfängerkennung (RXID) ersetzt wird, sofern die eigene Empfangsqualität höher als die eingetragene ist.

2. Verfahren nach Anspruch 1,
**dadurch gekennzeichnet,**
**dass** die räumlich verteilt angeordneten Transceivereinheiten (TRA1...TRAn) die empfangenen Funksignale aufbereiten und in digitaler Form über das Bussystem (BUS) an die Verarbeitungseinheit (VE2) (Basisstation) übertragen.

3. Verfahren nach einem der Ansprüche 1 oder 2,
**dadurch gekennzeichnet,**
**dass** eine Sende-/Empfangsqualität für jede der Transceivereinheiten (TRA1...TRAn) ermittelt wird und dass zur Funkübertragung an die Verarbeitungseinheit (VE2) nur die Transceivereinheit (TRA1...TRAn) mit der höchsten Sende-/ Empfangsqualität verwendet wird.

4. Verfahren nach einem der Ansprüche 1 bis 3,
**dadurch gekennzeichnet,**
**dass** der Rahmen (TOKEN) alle Transceivereinheiten (TRA1...TRAn) mit einer definierten Laufzeit nacheinander passiert.

5. Verfahren nach einem der Ansprüche 1 bis 4,
**dadurch gekennzeichnet,**
**dass** jede Transceivereinheit (TRA1...TRAn) einen in dem Header des Rahmens (TOKEN) implementierten Zähler inkrementiert.

6. Verfahren nach einem der Ansprüche 1 bis 5,
**dadurch gekennzeichnet,**
**dass** ein Senden eines Telegrams durch eine Transceivereinheit (TRA1...TRAn) derart erfolgt, dass die Verarbeitungseinheit (VE2) (Basisstation) in einem Sender-Kennungsfeld (TXID) des Rahmens (TOKEN) die Empfängerkennung (RXID) der Transceivereinheit mit der höchsten Empfangsqualität des letzten Rahmens (TOKEN) einträgt und die Transceivereinheit, deren Kennung (ID) in Sender-Kennungsfeld (TXID) eingetragen ist, das Sendetelegram (TXT) sendet.

## Claims

1. Method for the detection, transmission and analysis of at least one safety-related signal (S1 ... Sn), whereby the safety-related signal (S1 ... Sn) is detected with at least one detection unit (EE1 ... EEn) and transmitted via a radio system (FS) to at least one analysis unit (AE2),
**characterized in**
**that** the safety-related signal (S1 ... Sn) emitted by the at least one detection unit (EE1 ... EEn) is received by transceiver units (TRA1 ... TRAn) arranged in spatially distributed matter, whereby the transceiver units are connected via a bus system (BUS) to a processing unit (VE2) (base station) of the analysis unit (AE2), that the processing unit (VE2) (base station) cyclically transmits a telegram in the form of a frame (TOKEN) into the ring bus (BUS) preferably every 25 ms, and that the frame (TOKEN) is processed by each transceiver unit (TRA1 ... TRAn) that received a valid radio message, whereby a first said transceiver unit (TRA) enters the received data as well as a RSSI-value or another quality index into the frame (TOKEN) and whereby from each said transceiver unit (TRA1 ... TRAn) is replaced the quality index and optionally an receiving identification character (RXID), provided the own receiving quality is higher than the entered one.

2. Method according to claim 1,
**characterized in**
**that** the transceiver units (TRA1 ... TRAn) arranged in a spatially distributed manner prepare the received radio signals and transmit them in digital form via the bus system (BUS) to the processing unit (VE2) (base station).

3. Method according to one of claims 1 or 2,
**characterized in**
**that** a transmitting/ receiving quality for each of the transceiver units (TRA1 ... TRAn) is determined, and that only the transceiver unit (TRA1 ... TRAn) with the highest transmitting/ receiving quality is used for the radio transmission to the processing unit (VE2).

4. Method according to one of claims 1 or 3,
**characterized in**
**that** the frame (TOKEN) successively passes all transceiver units (TRA1 ... TRAn) with a defined transit time.

5. Method according to one of claims 1 or 4,
**characterized in**
**that** each transceiver unit (TRA1 ... TRAn) increments a counter implemented in the header of the frame (TOKEN).

6. Method according to one of claims 1 or 5,
**characterized in**
**that** a transmitting of the telegram takes place by a transceiver unit (TRA1 ... TRAn), that the processing unit (VE2) (base station) enters the receiving identification character (RXID) of the transceiver unit with the highest receiving quality of the last frame (TOKEN) in a transmitter identification field (TXID) of the frame (TOKEN) and that the transceiver unit whose identification character (ID) is entered in the transmitter identification field (TXID) transmits the input message (TXT).

## Revendications

1. Procédé destiné à l'acquisition, la transmission et l'analyse d'au moins un signal concernant la sécurité (S1...Sn), dans lequel le signal concernant la sécurité (S1...Sn) est acquis par au moins une unité d'acquisition (EE1...EEn) et transmis à au moins une unité d'analyse (AE1...AE4) par un système radio (FS),
**caractérisé en ce**
**que** le signal concernant la sécurité (S1...Sn) émis par l'au moins une unité d'acquisition (EE1...EEn) est reçu par des unités réceptrices-émettrices (TRA1...TRAn) réparties dans l'espace, sachant que les unités réceptrices-émettrices sont reliées par un système de bus (BUS) à une unité de traitement (VE2) (station de base) de l'unité d'analyse (AE2), que l'unité de traitement (VE2) (station de base) envoie cycliquement, de préférence toutes les 25 ms, un télégramme sous forme d'une trame (TOKEN) dans le bus annulaire (BUS) et que la trame (TOKEN) est traitée par chaque unité réceptrice-émettrice (TRA1...TRAn) qui a reçu un radiotélégramme valable, sachant qu'une première telle unité réceptrice-émettrice (TRA) inscrit dans la trame (TOKEN) les données reçues ainsi qu'une valeur RSSI ou un autre indice de qualité, et que par chaque telle unité réceptrice-émettrice (TRA) est remplacé l'indice de qualité et en option un identifiant de récepteur (RXID), dans la mesure où la propre qualité de réception est supérieure à celle inscrite.

2. Procédé selon la revendication 1,
**caractérisé en ce**
**que** les unités réceptrices-émettrices (TRA1...TRAn) réparties dans l'espace traitent les radiosignaux reçus et les transmettent sous forme numérique à l'unité de traitement (VE2) (station de base) via le système de bus (BUS).

3. Procédé selon l'une des revendications 1 ou 2,
**caractérisé en ce**
**qu'**est déterminée une qualité d'émission/de réception pour chacune des unités réceptrices-émettrices (TRA1...TRAn), et que pour la radiotransmission à l'unité de traitement (VE2) n'est utilisée que l'unité réceptrice-émettrice (TRA1...TRAn) présentant la plus haute qualité d'émission/de réception.

4. Procédé selon l'une des revendications 1 à 3,
**caractérisé en ce**
**que** la trame (TOKEN) passe successivement par toutes les unités réceptrices-émettrices (TRA1...TRAn) suivant une durée définie.

5. Procédé selon l'une des revendications 1 à 4,
**caractérisé en ce**
**que** chaque unité réceptrice-émettrice (TRA1...TRAn) incrémente un compteur implémenté dans l'en-tête de la trame (TOKEN).

6. Procédé selon l'une des revendications 1 à 5,
**caractérisé en ce**
**qu'**une émission d'un télégramme par une unité réceptrice-émettrice (TRA1...TRAn) a lieu de manière telle que l'unité de traitement (VE2) (station de base) inscrit dans un champ d'identifiant d'émetteur (TXID) de la trame (TOKEN) l'identifiant de récepteur (RXID) de l'unité réceptrice-émettrice présentant la plus haute qualité de réception de la dernière trame (TOKEN), et que l'unité réceptrice-émettrice dont l'identifiant (ID) est inscrit dans le champ d'identifiant d'émetteur (TXID) émet le télégramme d'émission (TXT).
